# EUROPÄISCHE PATENTSCHRIFT

(11) **EP 1 303 755 B1**
(45) Veröffentlichungstag und Bekanntmachung des Hinweises auf die Patenterteilung: **05.09.2007**
(21) Anmeldenummer: 01943069.3
(22) Anmeldetag: 12.05.2001
(51) Int. Cl.: G01N 29/04

(54) **VERFAHREN ZUR BOLZENPRÜFUNG UND VORRICHTUNG HIERZU**
METHOD FOR TESTING STUDS AND CORRESPONDING DEVICE
PROCEDE POUR LE TEST DE GOUJONS ET DISPOSITIF CORRESPONDANT

(30) Priorität: 13.07.2000 DE 10034010
(43) Veröffentlichungstag der Anmeldung: 23.04.2003
(73) Patentinhaber: Agfa NDT GmbH, D-50354 Hürth (DE)
(72) Erfinder: WAGNER, Joachim, 50226 Frechen (DE); SCHAPPACHER, Walter, 67098 Bad Dürkheim (DE)
(74) Vertreter: Bauer, Wulf
(86) Internationale Anmeldenummer: PCT/DE2001/001823
(87) Internationale Veröffentlichungsnummer: WO 2002/006817

(56) Entgegenhaltungen:
- EP-A- 0 833 151
- DE-A- 4 325 858
- FR-A- 2 745 087
- US-A- 5 383 366

## Beschreibung

Gegenstand der vorliegenden Erfindung ist ein Verfahren zur zerstörungsfreien Prüfung von Schweißverbindungen zwischen Blechen und darauf aufgeschweißten Bolzen, insbesondere von im Hubzündverfahren aufgeschweißten Stehbolzen. Solche mittels Kurzzeitschweißverfahren aufgeschweißten Bolzen verschiedener Geometrien werden in den unterschiedlichsten Anwendungsgebieten verwendet, beispielsweise in der Automobilindustrie als Befestigungselemente im Karosseriebau. Die Kurzzeitschweißverfahren sind weitgehend automatisiert und werden in der Industrie vielfach eingesetzt. Problematisch ist bislang eine Güteüberwachung der automatisiert erstellten Schweißverbindungen. Eine solche ist vielfach unerlässlich, da mittels aufgeschweißter Stehbolzen oftmals sicherheitsrelevante Verbindungen realisiert werden.

Bislang sind die einzigen in der Praxis realisierten Prüfverfahren rein mechanische Prüfverfahren. Diese beruhen auf der Ermittlung mechanischer Kenngrößen der zu prüfenden Schweißverbindungen, hier insbesondere des Abzugs-, Knick- oder Abdrehmoments des aufgeschweißten Bolzens. Problematisch an den mechanischen Prüfverfahren ist jedoch, dass eine Vorschädigung und damit ein mögliches späteres Versagen der geprüften Schweißverbindung nicht ausgeschlossen werden kann.

Bislang bekannte zerstörungsfreie Prüfungsverfahren, welche auf der Verwendung von Ultraschall basieren, beruhen im wesentlichen darauf, die Dämpfung von Ultraschallsignalen, die sich in Richtung der Längsachse des aufgeschweißten Bolzens ausbreiten, bei der Reflektion an bzw. Transmission durch das Schweißbad der zu prüfenden Schweißverbindung zu erfassen. Dabei wurde bislang ausschließlich von Longitudinalwellen Gebrauch gemacht. Realisiert wurden solche Prüfverfahren mittels senkrecht einschallender Prüfköpfe, die im Einkopfbetrieb verwendet wurden. Wegen der im allgemeinen unebenen Bolzenkopffläche erfolgte die Einleitung der Longitudinalwellen rückseitig von der glatten Blechoberfläche aus. Es wurden somit in Richtung der Längsachse des Bolzens arbeitende Impuls-Reflektions-Verfahren eingesetzt. Ein solches Prüfverfahren ist aus FR-A-2745087 bekannt.

Derartige Prüfverfahren, welche auf der Verwendung von Ultraschall basieren, haben bislang nicht den Zuverlässigkeitsgrad erreicht, dass sie standardmäßig zur Prüfung von Schweißverbindungen zwischen Bolzen und Blechen herangezogen werden können. Diese Ultraschallprüfverfahren zeigten eine mangelhafte Korrelation zwischen den Ergebnissen der Ultraschallprüfung und denjenigen der mechanischen Prüfverfahren.

Aufgabe der vorliegenden Erfindung ist es daher, ein zerstörungsfreies Prüfverfahren anzugeben, welches auf der Verwendung von Ultraschall basiert und eine Prüfung der Schweißverbindung zwischen einem auf ein Blech aufgeschweißten Stehbolzen und dem Blech erlaubt und gleichzeitig eine deutlich bessere Korrelation mit den Ergebnissen mechanischer Prüfverfahren aufweist als bisherige Ultraschallprüfverfahren. Insbesondere soll ein Verfahren angegeben werden, welches vorteilhaft im Rahmen der automatisierten Erstellung und Prüfung der Schweißverbindungen eingesetzt werden kann. Weiterhin soll eine Vorrichtung angegeben werden, welche zur Ausführung des erfindungsgemäßen Verfahrens geeignet ist.

Gelöst wird diese Aufgabe durch ein Verfahren mit den Merkmalen des Anspruchs 1 sowie durch eine Vorrichtung mit den Merkmalen des Anspruchs 10.

Grundidee des erfindungsgemäßen Verfahren ist, dass intakte Schweißverbindungen von mangelhaften Schweißverbindungen anhand des Durchmessers des Schweißbades unterschieden werden können. Als Schweißbad wird der Teil des Blechs bezeichnet, in dem sich das Materialgefüge durch den Schweißvorgang dem walzfreien Blech verändert hat. Das erfindungsgemäße Verfahren basiert daher auf einer Erfassung des Schweißbaddurchmessers. Als Entscheidungskriterium dient in erster Linie, ob ein für eine konkrete Schweißverbindung vorgegebener Mindestdurchmesser des Schweißbades erreicht ist oder nicht.

Selbstverständlich ist dieser Mindestschweißbaddurchmesser abhängig von den speziellen Parametern der zu prüfenden Schweißverbindung. Insbesondere gehen hier ein die Geometrie des aufgeschweißten Stehbolzens, die Geometrie des Blechs, die Materialeigenschaften von Stehbolzen und Blech sowie die speziellen Eigenschaften des verwendeten Schweißverfahrens. Für eine vorgegebene Kombination von Stehbolzen und Blech und ein bestimmtes Schweißverfahren kann beispielsweise im Rahmen von Vorversuchen der Durchmesser des Schweißbades mittels des erfindungsgemäßen zerstörungsfreien Prüfverfahrens ermittelt werden. Anschließend kann unter Verwendung der vorbekannten mechanischen Prüfverfahren ermittelt werden, ab welchem Mindestdurchmesser des Schweißbades die zu prüfenden Schweißverbindungen als intakt anzusehen sind. Auf diese Weise kann ein Norm-Mindestradius des Schweißbades ermittelt werden.

Das erfindungsgemäße Prüfverfahren, welches zur vorzugsweise automatisierten Prüfung solcher Schweißverbindungen verwendet wird, beruht dann im wesentlichen darauf, die zu prüfende Schweißverbindung daraufhin zu untersuchen, ob der im Rahmen der Vorversuche ermittelte Norm-Mindestradius des Schweißbades im konkreten Fall erreicht oder nicht erreicht wurde. Auf diese Weise ist eine sichere Klassifikation der zu prüfenden Schweißverbindung möglich.

Das erfindungsgemäße Verfahren beruht auf einer gerichteten Ausbreitung von Ultraschallsignalen im Blech, auf das ein Stehbolzen aufgeschweißt ist. Dabei weist die Schallausbreitungsrichtung der Ultraschallsignale zumindest eine in Ausdehnungsrichtung des Blechs gerichtete Komponente auf. Damit können die Ultraschallsignale an einem ersten Punkt A in das Blech eingeschallt werden und an einem zweiten Punkt B aus dem Blech ausgekoppelt werden. Dabei sind die Punkte A und B räumlich voneinander getrennt. Die Einschallung der Ultraschallsignale erfolgt dabei mittels eines schräg einschallenden Ultraschallsenders am Einkoppelort A. Die Auskopplung der Ultraschallsignale am Auskoppelort B erfolgt mittels eines Ultraschallempfängers, der vorzugsweise eine besondere Empfindlichkeit für schräg einfallende Ultraschallsignale aus der Richtung des Einkoppelpunktes A aufweist. Insbesondere kann der Ultraschallempfänger im wesentlichen die gleichen ultraschallakustischen Eigenschaften aufweisen wie der Ultraschallsender. Im allgemeinen wird der Schalllaufweg zwischen dem Einkoppelort A und dem Auskoppelort B eine Mehrzahl von Reflektionen an den Oberflächen des Blechs aufweisen. Vorzugsweise wird der Abstand zwischen dem Einkoppelort A und dem Auskoppelort B so gewählt, dass für vorgegebene Materialeigenschaften des Blechs sowie Ultraschallparameter der ungestörte Schalllaufweg der am Einkoppelort A in das Blech eingeschallten Ultraschallsignale im wesentlichen den Auskoppelort B trifft.

Zur Prüfung einer Schweißverbindung mittels des erfindungsgemäßen Verfahrens werden der Einkoppelort A und der Auskoppelort B so auf dem Blech platziert, dass die Verbindungslinie zwischen beiden Punkten A und B zumindest durch den Randbereich der zu prüfenden Schweißverbindung verläuft. Der minimale Abstand der Verbindungslinie zwischen beiden Punkten vom Zentrum des Kontaktbereichs ist dabei mit d bezeichnet. Durch Parallel-Verschieben der Verbindungslinie zwischen A und B kann nunmehr prinzipiell das gesamte Schweißbad der zu prüfenden Schweißverbindung von den Ultraschallsignalen überstrichen werden.

Das erfindungsgemäße Verfahren beruht darauf, dass das Schweißbad der zu prüfenden Schweißverbindung aufgrund seines veränderten Materialgefüges andere ultraschallakustische Eigenschaften aufweist als das Materialgefüge des Blechs, welches im allgemeinen in einem Walzprozess hergestellt ist. Diese veränderten ultraschallakustischen Materialeigenschaften des Schweißbades führen zu einer verminderten Transmission zwischen dem Einkoppelpunkt A und dem Auskoppelpunkt B, wenn zwischen beiden Punkten das Schweißgefüge liegt, das heißt, wenn die Ultraschallsignale auf ihrem Weg von A nach B auf das Schweißbad treffen.

Wird die Intensität der vom Punkt A zum Punkt B transmittierten Ultraschallsignale, ortsaufgelöst als Funktion des Abstands d aufgenommen, so kann anhand des sich ergebenen Kurvenverlaufs die Größe des Schweißbades bestimmt werden. Die ortsaufgelöste Erfassung der Intensität der Ultraschallsignale kann insbesondere dazu verwendet werden, im Rahmen der beschriebenen Vorversuche den Durchmesser als intakt einzustufender Schweißverbindungen zu ermitteln. Hierbei wird vorteilhaft für eine gegebene Schweißverbindung ein Norm-Mindestradius des Schweißbades der zu prüfenden Schweißverbindung ermittelt, bei dessen Überschreitung die zu prüfende Schweißverbindung als intakt klassifiziert wird. Bei Unterschreiten des Norm-Mindestradius wird die zu prüfende Schweißverbindung dagegen als mangelhaft klassifiziert. Bei der praktischen Prüfung kann beispielsweise eine normierte Signalstärke an der Flanke des sich ergebenden Verlaufs der Ultraschallintensität verwendet werden.

In einer ersten Ausbildung des erfindungsgemäßen Verfahrens, welche sich besonders vorteilhaft im Rahmen automatisierter Fertigungs- und Prüfungsverfahren einsetzen lässt, wird die Schwächung von Ultraschallsignalen erfasst, die sich in einem Abstand x am Zentrum der zu prüfenden Schweißverbindung vorbei vom Punkt A zum Punkt B bewegen. Dieser kleinste Abstand x des Schalllaufwegs ist äquivalent zu dem kleinsten Abstand d zwischen der Verbindungslinie A-B und dem Zentrum des Kontaktbereichs, welcher mit d bezeichnet wird. Dabei wird dieser Abstand d so gewählt, dass die Verbindungslinie zwischen A und B auf dem oder innerhalb des Norm-Mindestradius des Schweißbades verläuft, welcher als mindestens erforderlich angesehen wird, um die Schweißverbindung als intakt klassifizieren zu können. Insbesondere kann d genau so gewählt werden, dass der Schalllaufweg der Ultraschallsignale dann nicht mehr das Schweißbad der zu prüfenden Schweißverbindung erfasst, wenn dieses nicht den Norm-Mindestradius aufweist, das heißt, wenn die Schweißverbindung als mangelhaft zu klassifizieren ist.

Mittels mehrerer Weiterbildungen kann die Empfindlichkeit des erfindungsgemäßen Verfahrens weiter gesteigert werden. Eine erste Steigerung der Empfindlichkeit des erfindungsgemäßen Verfahrens ergibt sich dann, wenn transversal polarisierte Ultraschallsignale bei der Ausführung des erfindungsgemäßen Verfahrens verwendet werden. Im Gegensatz zu den in den vorbekannten zerstörungsfreien Ultraschallprüfverfahren eingesetzten Longitudinalwellen weisen transversal polarisierte Ultraschallwellen eine deutlich erhöhte Empfindlichkeit gegenüber dem Materialgefüge des Materials auf, in dem sie sich ausbreiten. Insbesondere erfahren transversal polarisierte Ultraschallwellen eine deutlich stärkere Schwächung im grobkörnigeren Materialgefüge des Schweißbades als Longitudinalwellen. In einer vorteilhaften Weiterentwicklung des erfindungsgemäßen Verfahrens werden daher im Blech in erster Linie Transversalwellen angeregt. Als besonders vorteilhaft hat sich herausgestellt, wenn mindestens 75 % bezogen auf die Ultraschallleistung der im Blech erzeugten Ultraschallsignale transversal polarisiert sind. Besonders vorteilhaft ist es, wenn mehr als 90 % bezogen auf die Ultraschallleistung der in das Blech eingeschallten Ultraschallsignale transversal polarisiert sind. Dabei ist es messtechnisch gesehen von großem Vorteil, wenn ein möglichst hoher Anteil an transversal polarisierten Ultraschallwellen im Blech erzeugt wird, da dies einerseits die Empfindlichkeit des Messverfahrens prinzipbedingt erhöht und andererseits die messtechnische Auswertung der am Auskoppelort B empfangenen Ultraschallsignale deutlich vereinfacht. Eine Optimierung des erfindungsgemäßen Verfahrens wird daher immer darauf abzielen, einen möglichst hohen Anteil an transversal polarisierten Ultraschallsignalen in das Blech einzuschallen.

Dies kann vorteilhaft durch Anpassung des Einschallwinkels des Ultraschallsenders an die Materialeigenschaften des Blechs sowie die charakteristischen Größen des eingestrahlten Ultraschalls wie der Frequenz geschehen. Bei geeigneter Wahl des Einschallwinkels ist es möglich ausschließlich Transversalwellen im Blech anzuregen. Dieses Phänomen ist seit langem bekannt und kann in der entsprechenden Fachliteratur bezüglich der grundlegenden Eigenschaften von Ultraschallwellen nachgelesen werden. Insbesondere kann dabei eine vollständige Konversion der vom Ultraschallsender ausgestrahlten, im allgemeinen longitudinal polarisierten Ultraschallwellen in transversal polarisierte Ultraschallwellen im Blech erreicht werden.

Eine weitere Weiterbildung des erfindungsgemäßen Verfahrens beruht auf der Erkenntnis, dass bei intakter Schweißverbindung eine Einkopplung der sich im Blech von A nach B ausbreitenden Ultraschallsignale in den aufgeschweißten Bolzen möglich ist. Eine solche Einkopplung der Ultraschallsignale in den Bolzen führt zu einer weiteren Schwächung der durch das Schweißbad transmittierten Ultraschallsignale, das heißt, zu einer weiteren Abnahme der Signalintensität am Auskoppelort B. Um diesen Effekt möglichst gut ausnutzen zu können, ist es erforderlich, den Schalllaufweg der Ultraschallsignale im Blech so abzustimmen, dass der geometrische Schalllaufweg möglichst genau den Kontaktbereich trifft, in welchem der Bolzen auf das Blech aufgeschweißt ist. Dies kann dadurch geschehen, dass die Ultraschallsignale in diesem Punkt eine Reflektion an der entsprechenden Oberfläche des Blechs erfahren. Ist die Schweißverbindung zwischen Blech und Bolzen korrekt ausgeführt, so wird dann eine besonders hohe Einkopplung der Ultraschallsignale in den Stehbolzen erzielt.

Die vom Ultraschallsender in das Blech eingeschallten gerichteten Ultraschallsignale weisen im sogenannten Nahfeld einen Fokuspunkt auf, an dem der Schalldruck ein globales Maximum aufweist. Mit diesem globalen Maximum ist ein minimaler Durchmesser des gerichteten Ultraschallstrahls verknüpft. Eine besonders hohe Ortsauflösung des erfindungsgemäßen Verfahrens kann daher realisiert werden, wenn das Schweißbad der zu prüfenden Schweißverbindung im wesentlichen mit dem Fokus des gerichteten Ultraschallstrahls abgetastet wird. In Abhängigkeit von den Materialparametern des Blechs und den Eigenschaften des verwendeten Ultraschallsenders, insbesondere dessen Schwingungsfrequenz und Ausstrahlungscharakteristik kann ein Fokusdurchmesser von einem Millimeter und darunter realisiert werden. Damit kann der Durchmesser des Schweißbades unter Verwendung des erfindungsgemäßen Verfahrens ohne weiteres mit einer vergleichbaren Genauigkeit ermittelt werden, wenn die Länge des Schalllaufwegs zwischen dem Einkoppelort A und dem Kontaktbereich der zu prüfenden Schweißverbindung etwa eine Nahfeldlänge beträgt.

Zur Durchführung des erfindungsgemäßen Verfahrens wird eine Vorrichtung gemäß Anspruch 10 bevorzugt. Die erfindungsgemäße Vorrichtung ist speziell dazu ausgelegt, das erfindungsgemäße Verfahren durchzuführen. Sie umfasst einen Ultraschallsender zur Einschallung von gerichteten Ultraschallsignalen in das Blech an einem Einkoppelort A und einen Ultraschallempfänger zur Auskopplung der vom Ultraschallsender in das Blech eingeschallten und durch dieses transmittierten Ultraschallsignale an einem Auskoppelort B. Dabei ist der Ultraschallsender schräg einschallend ausgeführt. Der Ultraschallempfänger ist so relativ zum Ultraschallsender angeordnet, das er bei ungestörter Ultraschallsignalausbreitung im Blech, das heißt im Blech, auf welches kein Bolzen aufgeschweißt ist, im Schalllaufweg der Ultraschallsignale liegt. Dabei ist der Ultraschallempfänger auf schräg einfallende Ultraschallsignale empfindlich. Insbesondere weist der Ultraschallempfänger die gleichen ultraschallakustischen Eigenschaften wie der Ultraschallsender auf. Weiterhin ist eine Abstandsvorrichtung vorgesehen, die dazu eingerichtet ist, einen definierten Abstand d der Verbindungslinie zwischen Einkoppelort A und Auskoppelort B vom Zentrum des Kontaktbereichs der zu prüfenden Schweißverbindung einzustellen.

Ist die Abstandsvorrichtung so ausgelegt, dass der Abstand d fest gewählt ist, so wird der Abstand d vorteilhaft kleiner gewählt als der Norm-Mindestradius des Schweißbades einer als einwandfrei zu klassifizierenden Schweißverbindung. Durch diese Wahl des Abstands d ist sichergestellt, dass der Schalllaufweg der Ultraschallsignale stets das Schweißbad einer intakten Schweißverbindung durchläuft.

Weiterhin ergeben sich besondere Vorteile, wenn der fest gewählte Abstand d größer gewählt ist als der Normradius des Schweißbades einer als mangelhaft zu klassifizierenden Schweißverbindung, der ebenfalls im Rahmen der Vorversuche ermittelt wurde.

Eine Kombination der beiden letztgenannten Merkmale ermöglicht es, eine Vorrichtung zu realisieren, deren Ultraschallsignale das Schweißbad einer intakten Schweißverbindung durchlaufen, dagegen das Schweißbad einer mangelhaften Schweißverbindung nicht berühren. Bei diesem Verlauf des Schalllaufwegs im Blech ist eine sichere Klassifikation der zu prüfenden Schweißverbindung anhand der zwischen dem Einkoppelort A und dem Auskoppelort B auftretenden Schwächung, beispielsweise im Vergleich zu ungestörten Signalausbreitung in einem Blech ohne aufgeschweißten Bolzen, möglich.

In einer weiteren vorteilhaften Ausgestaltung der erfindungsgemäßen Vorrichtung ist die Abstandsvorrichtung so ausgestaltet, dass der Abstand d varüert werden kann. Insbesondere vorteilhaft ist es, wenn die Abstandsvorrichtung so ausgeführt ist, dass das gesamte Schweißbad der zu prüfenden Schweißverbindung mittels der Ultraschallsignale überstrichen werden kann, das heißt, der Schalllaufweg der Ultraschallsignale zwischen dem Einkoppelort A und dem Auskoppelort B durch Variation des Abstands d über das gesamte Schweißbad hinweg parallel verschoben werden kann.

Weitere Ausgestaltungen und Vorteile des erfindungsgemäßen Verfahrens sowie der erfindungsgemäßen Vorrichtung ergeben sich aus der nun folgenden Diskussion von Ausführungsbeispielen, die nicht einschränkend zu verstehen sind und anhand der Zeichnung erläutert werden. In dieser zeigen:
- Fig. 1:: eine Aufsicht auf ein Blech mit aufgeschweißtem Bolzen und aufgesetztem Ultraschallsender sowie Ultraschallempfänger,
- Fig. 2:: eine schnittbildliche Seitenansicht des Blechs mit aufgeschweißtem Bolzen, wobei die Schnittebene durch die Längsachse des aufgeschweißten Bolzens verläuft,
- Fig. 3:: eine Aufsicht auf ein Blech mit aufgeschweißtem Bolzen, wobei exemplarisch zwei verschiedene Schweißbaddurchmesser gezeigt sind, und
- Fig. 4:: der ortsabhängige Verlauf der Schwächung der durch das Blech vom Punkt A zum Punkt B transmittierten Ultraschallsignale als Funktion des Abstands d vom Kontaktbereich.

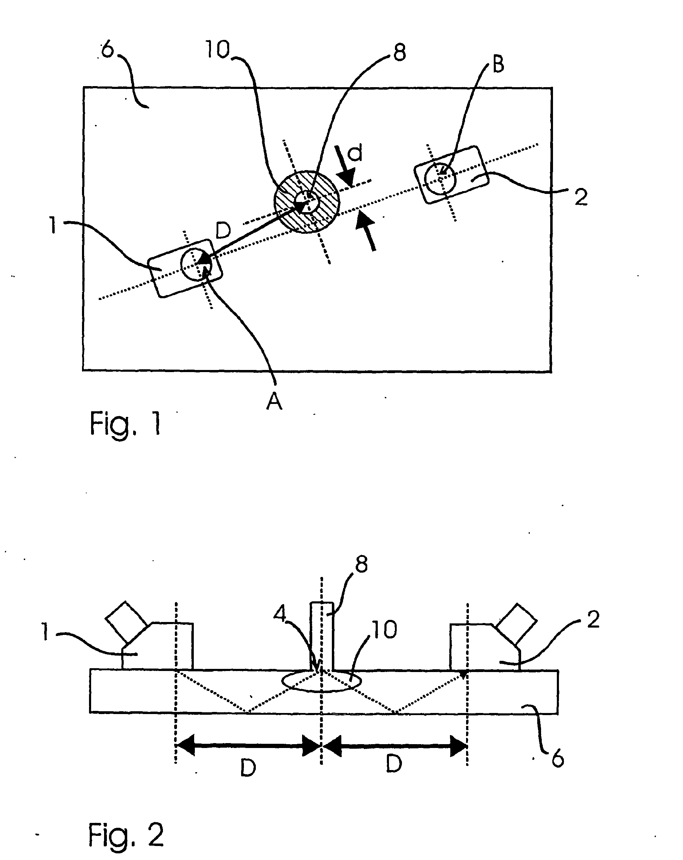

Figur 1 zeigt schematisch in Aufsicht eine Anordnung, welche zur Durchführung des erfindungsgemäßen Verfahrens geeignet ist. Auf ein flächenhaft ausgedehntes Blech 6 wird ein Stehbolzen 8 aufgesetzt. Blech 6 und Bolzen 8 berühren sich in einem Kontaktbereich 4. Mittels eines geeigneten Schweißverfahrens, beispielsweise des Hubzündverfahrens, wird der Bolzen 8 auf das Blech 6 aufgeschweißt. Dabei bildet sich unterhalb des Bolzens 8 im Blech das sogenannte Schweißbad 10 mit verändertem Materialgefüge aus. Dieses ist in Figur 1 schematisch in Aufsicht gezeichnet, in Figur 2 ist es deutlicher im Schnitt zu sehen. Im allgemeinen hat das Schweißbad 10 die Form eines Tropfens.

Zur Prüfung der Schweißverbindung zwischen Blech 6 und Bolzen 8 ist ein Ultraschallsender 1 auf das Blech aufgesetzt, welcher am Einkoppelort A gerichtete Ultraschallsignale in das Blech einschallt. Diese Ultraschallsignale verlaufen unter einem von null Grad verschiedenen Winkel gegen die Normale auf die Blechoberfläche am Einkoppelort A. Bei einer solchen schrägen Einschallung ergibt sich im allgemeinen der aus Figur 2 ersichtliche zickzackförmige Schalllaufweg der Ultraschallsignale. Die eingeschallten Ultraschallsignale werden jeweils an den Oberflächen des Blechs 6 reflektiert, wodurch sich die Ultraschallsignale längs der Ausdehnungsrichtung des Blechs ausbreiten. Aus Figur 2 ist ersichtlich, dass der Ultraschallsender 1 in einem solchen Abstand D vom Kontaktbereich 4 angeordnet ist, dass der Kontaktbereich 4, oder zumindest das Schweißbad 10 einer als intakt zu klassifizierenden Schweißverbindung im Schalllaufweg liegt. Bei gegebenen Einschallwinkel im Blech muss dazu der Abstand D entsprechend angepasst gewählt werden. Gleichzeitig muss die Richtung der vom Ultraschallsender 1 in das Blech 6 eingeschallten Ultraschallsignale passend gewählt werden.

Die vom Ultraschallsender 1 am Einkoppelort A in das Blech 6 eingeschallten Ultraschallsignale passieren den Kontaktbereich 4 bzw. das Schweißbad 10 der zu prüfenden Schweißverbindung, erfahren dort eine mehr oder weniger starke Schwächung und breiten sich weiter im Blech 6 aus. Zur Auskopplung dieser durch das Schweißbad 10 hindurch transmittierten Ultraschallsignale ist am Auskoppelort B ein Ultraschallempfänger 2 angeordnet. Der Auskoppelort B ist so gewählt, dass er im Schalllaufweg der ungestörten Ultraschallsignale im Blech 6 liegt.

Als Ultraschallempfänger 2 wird ein Ultraschallempfänger verwendet, welcher empfindlich ist auf unter einem von null Grad verschiedenen Winkel gegen die Flächennormale am Auskoppelort B einfallende Ultraschallsignale. Insbesondere können Ultraschallsender 1 und Ultraschallempfänger 2 im wesentlichen gleiche ultraschallakustische Eigenschaften aufweisen.

Aus der Aufsicht in Figur 1 ist ersichtlich, dass der Schalllaufweg, welcher durch die Gerade durch die Punkte A und B angedeutet ist, am Zentrum des Kontaktbereichs 4, das heißt von der Längsachse des Bolzens 8, vorbei verläuft. Je nach Wahl des Abstands d der Geraden durch A und B vom Zentrum des Kontaktbereichs 4 wird das Schweißbad der zu prüfenden Schweißverbindung von den Ultraschallsignalen durchlaufen oder nicht. Je nach Beschaffenheit der zu prüfenden Schweißverbindung und Lage, an dem das Schweißbad der zu prüfenden Schweißverbindung durchlaufen wird, ergibt sich eine unterschiedlich starke Schwächung der vom Punkt A zum Punkt B transmittierten Ultraschallsignale. Die bei einem gegebenen Abstand d auf tretende Schwächung kann daher als Maß zur Beurteilung der räumlichen Ausdehnung des Schweißbades und damit der Güte der Schweißverbindung herangezogen werden.

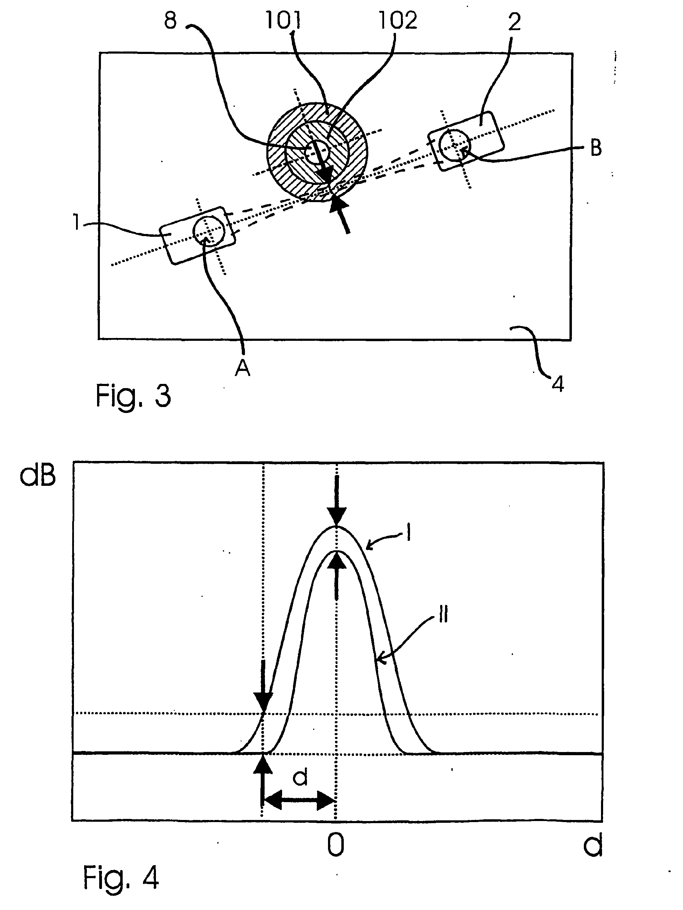

Verschiebt man Ultraschallsender 1 und Ultraschallempfänger 2 kontinuierlich über das Schweißbad 10 der zu prüfenden Schweißverbindung hinweg, so erhält man die transmittierte Intensität oder äquivalent die Dämpfung der transmittierten Ultraschallsignale als Funktion des Abstands d. Ein solcher ortsabhängiger Signalverlauf ist aus Figur 4 ersichtlich. Dabei ist die gemessene Dämpfung der transmittierten Ultraschallsignale im Vergleich zu ungestörten Signalausbreitung im Blech ohne aufgeschweißten Bolzen 8 als Ordinate aufgetragen, als Abszisse dient der Abstand d der Verbindungsgeraden zwischen A und B vom Zentrum des Kontaktbereichs 4. Die mit I gekennzeichnete obere Kurve zeigt den Signalverlauf durch eine als intakt zu klassifizierende Schweißverbindung, deren Schweißbad 101 einen großen Durchmesser aufweist. Für große Abstandswerte d erkennt man, dass keine zusätzliche Dämpfung relativ zur ungestörten Signalausbreitung im Blech 6 auftritt. Sobald das Schweißbad 10 der zu prüfenden Schweißverbindung in den Schalllaufweg der Ultraschallsignale gerät, beginnt eine Schwächung der transmittierten Ultraschallsignale. Diese nimmt stetig zu bis zum Zentrum des Schweißbades 10. Hieran schließt sich ein im wesentlichen symmetrischer Abfall des Signals an.

Aus dem Kurvenverlauf kann direkt ein Schweißbaddurchmesser abgelesen werden. Als dieser kann beispielsweise derjenige Durchmesser definiert werden, an dem die transmittierten Signale um beispielsweise drei Dezibel gegenüber den ungestörten Signalen abgefallen sind. Auf diese Weise können im Rahmen von Vorversuchen die Schweißbaddurchmesser von Schweißverbindungen ermittelt werden, welche dann mittels konventioneller mechanischer Prüfverfahren auf ihre Haltbarkeit hin überprüft werden. Auf diese Weise ist es möglich, einen Schweißbaddurchmesser, oder äquivalent Schweißbadradius, zu ermitteln, welcher mindestens erforderlich ist, um die zu prüfende Schweißverbindung als intakt klassifizieren zu können. Im Rahmen von Vorversuchen wird eine größere Zahl von Schweißverbindungen geprüft, aus den Ergebnissen dieser Prüfung kann ein Norm-Mindestschweißbadradius bestimmt werden, ab dem eine Schweißverbindung als intakt klassifiziert werden kann.

Kurve II in Figur 4 bezeichnet den Signalverlauf bei Prüfung einer als mangelhaft zu klassifizierenden Schweißverbindung, deren Schweißbad 102 einen verkleinerten Durchmesser aufweist. Dieses wird unmittelbar deutlich beim Vergleich der Kurven I und II.

Dieser Effekt kann vorteilhaft zur Unterscheidung zwischen intakten und mangelhaften Schweißverbindungen anhand einer einzigen Transmissionsmessung verwendet werden. Vorteilhaft wird der Abstand d der Verbindungslinie zwischen A und B so gewählt, dass der Schalllaufweg der Ultraschallsignale das Schweißbad einer als mangelhaft zu klassifizierenden Schweißverbindung gerade nicht mehr berührt, wohingegen er das Schweißbad einer als intakt zu klassifizierenden Schweißverbindung im Randbereich durchläuft. Dementsprechend wird der Abstand d geringfügig kleiner gewählt als der Norm-Mindestradius des Schweißbads 10 einer als intakt zu klassifizierenden Schweißverbindung.

Das Schweißbad 10 einer als mangelhaft zu klassifizierenden Schweißverbindung weist dagegen einen kleineren Radius auf, so dass es von den Ultraschallsignalen nicht mehr erfasst wird. Wird nun eine Schweißverbindung mit unbekanntem Schweißbadradius auf diese Weise geprüft, so ergibt sich im Fall einer mangelhaften Schweißverbindung keine oder nur eine geringe Schwächung der vom Punkt A und zum Punkt B transmittierten Ultraschallsignale. Ist dagegen die Schweißverbindung intakt, so durchlaufen die Ultraschallsignale den Randbereich des Schweißbades 10 der Schweißverbindung und erfahren dort eine Schwächung. Es tritt daher eine Schwächung der vom Punkt A zum Punkt B transmittierten Ultraschallsignale auf.

Entsprechend der Vorgehensweise zur Bestimmung des Schweißbaddurchmessers im Rahmen der Vorversuchen wird nun eine Schwelle festgelegt, ab welcher Mindestschwächung der vom Punkt A zum Punkt B transmittierten Signale das Schweißbad 10 der zu prüfenden Schweißverbindung einen ausreichenden Durchmesser aufweist und somit als intakt zu klassifizieren ist.

Besonders vorteilhaft ist das erfindungsgemäße Verfahren anzuwenden, wenn eine Vorrichtung verwendet wird, welche den Ultraschallsender 1 und den Ultraschallempfänger 2 relativ zueinander fixiert. Dabei ist der Abstand D des Ultraschallsenders 1 vom Zentrum des Kontaktbereichs 4 der zu prüfenden Schweißverbindung vorteilhaft so gewählt, dass der Kontaktbereich 4 bzw. das Schweißbad 10 der zu prüfenden Schweißverbindung vom Schalllaufweg der Ultraschallsignale erfasst werden. Der Abstand d zwischen der Verbindungslinie zwischen A und B wird mittels einer Abstandsvorrichtung fest eingestellt, welche beispielsweise mittels einer Einsetzbuchse mit Bohrung ausgeführt sein kann. Eine definierte Verschiebung um den Abstand d kann beispielsweise mittels exzentrischer Ausführung der Bohrung realisiert werden.

Besondere Vorteile zur Durchführung des Verfahrens ergeben sich weiterhin, wenn der Ultraschallsender 1 in einem solchen Abstand D von der zur zu prüfenden Schweißverbindung angeordnet ist, dass die gerichteten Ultraschallsignale ein Schalldruckzentrum im kleinsten Abstand d der Verbindungslinie A-B vom Zentrum der Schweißverbindung aufweisen. Dies kann beispielsweise dadurch realisiert werden, dass der Ultraschallsender 1 etwa eine Nahfeldlänge vom Ort des kleinsten Abstands d entfernt angeordnet wird.

Weist der Ultraschallempfänger 2 im wesentlichen die gleichen ultraschallakustischen Eigenschaften wie der Ultraschallsender 1 auf, so wird der Ultraschallempfänger 2 symmetrisch zum Zentrum der Schweißverbindung im gleichen Abstand D von diesem angeordnet. Auf diese Weise beträgt der Abstand zwischen Ultraschallsender 1 und Ultraschallempfänger 2 im wesentlichen zwei Nahfeldlängen. Indem das Schweißbad 10 der zu prüfenden Schweißverbindung mit dem Fokus der gerichteten Ultraschallsignale abgetastet wird, kann ein besonders hohes Auflösungsvermögen erzielt werden.

Wird der Ultraschallsender 1 wie aus Figur 2 ersichtlich so angeordnet, dass der Kontaktbereich 4 oder zumindest das Schweißbad 10 der zu prüfenden Schweißverbindung im Schalllaufweg der Ultraschallsignale liegt, so ergibt sich bei intakter Schweißverbindung eine erhöhte Einkopplung der Ultraschallsignale in den aufgeschweißten Bolzen 8. Hieraus ergibt sich eine verringerte Transmission der Ultraschallsignale vom Punkt A zum Punkt B. Die Einkopplung in den Bolzen ist besonders stark bei transversal polarisierten Ultraschallwellen. Dieser Effekt ist ebenfalls aus Figur 4 ersichtlich. Man erkennt deutlich einen unterschiedlichen Kurvenverlauf im Zentrum der zu prüfenden Schweißverbindung je nachdem, ob die zu prüfende Schweißverbindung als intakt oder als mangelhaft anzusehen ist. Kurve I zeigt den Verlauf für eine intakte Schweißverbindung, sie zeigt eine stärkere maximale Dämpfung als die Kurve II, welche eine als mangelhaft zu klassifizierende Schweißverbindung zeigt. Dieser Effekt bewirkt zusätzlich eine stark unterschiedliche Transmission bzw. Schwächung der Ultraschallsignale, je nachdem ob sie durch das Schweißbad 10 einer intakten oder einer mangelhaften Schweißverbindung verlaufen.

Schließlich hat sich gezeigt, dass eine besonders hohe Empfindlichkeit des erfindungsgemäßen Verfahrens realisiert werden kann, wenn im wesentlichen nur transversal polarisierte Ultraschallsignale verwendet werden. Diese transversal polarisierten Ultraschallwellen weisen eine stärkere Schwächung beim Durchgang durch das grobkörnigere Gefüge des Schweißbades auf als die bislang verwendeten longitudinal polarisierten Ultraschallsignale. Durch Verwendung transversal polarisierter Ultraschallsignale kann daher die Empfindlichkeit des erfindungsgemäßen Verfahrens noch erhöht werden. Dabei ist der Ultraschallsender 1 in Figur 2 vorteilhaft daraufhin optimiert, im wesentlichen nur transversal polarisierte Ultraschallsignale in das Blech 6 einzuschallen. Dies kann unter Ausnutzung der Brechungsgesetze für Ultraschallwellen beim Übergang zwischen Medien mit unterschiedlichen Schallgeschwindigkeiten so geschehen, das praktisch die gesamte eingeschallte Intensität in transversal polarisierte Ultraschallwellen im Blech 6 umgewandelt wird. Die Verwendung möglichst vollständig transversal polarisierter Ultraschallwellen im Blech 6 ist im Rahmen des erfindungsgemäßen Verfahrens von besonderem Vorteil, einerseits aufgrund der bereits erwähnten erhöhten Empfindlichkeit gegenüber Gefügeveränderungen, andererseits aufgrund der messtechnisch deutlich einfacheren Signalerfassung und -verarbeitung, da nur ein Polarisationstyp von Ultraschallwellen detektiert werden muss. Wird ein Gemisch von longitudinal und transversal polarisierten Ultraschallwellen verwendet, so muss am Auskoppelort B eine Überlagerung zweier unterschiedlich stark geschwächter Signale entfaltet werden, was einen zusätzlichen messtechnischen Aufwand bedeutet.

Die vom Ultraschallempfänger 2 aufgenommenen Ultraschallsignale werden zur Weiterverarbeitung an eine aus den Figuren nicht ersichtliche Signalverarbeitungsvorrichtung weitergeleitet. Diese kann beispielsweise dazu geeignet sein, einen Signalverlauf analog zu Figur 4 zu erfassen und auszuwerten. Sie kann aber auch in einer einfacheren Form ausgestaltet sein, in der das tatsächlich erfasste Ultraschallsignal mit einem gespeicherten Normwert verglichen wird. Ein solcher Normwert kann sich beispielsweise auf die ungestörte Ultraschallausbreitung im Blech 6 ohne aufgeschweißten Bolzen 8 beziehen. Weiterhin kann sich ein solcher Normwert selbstverständlich auch auf die Ultraschallausbreitung im Blech 6 mit aufgeschweißtem Bolzen 8 aber mangelhaft ausgeführter Schweißverbindung beziehen. Beliebige weitere Normwerte sind denkbar und können realisiert werden.

Im gezeigten Ausführungsbeispiel ist das erfindungsgemäße Verfahren zur Durchführung mittels Volumenwellen ausgelegt, welches sich mittels Vielfachreflektion an den Blechoberflächen im Blech ausbreiten. Das erfindungsgemäße Verfahren ist jedoch hierauf nicht grundsätzlich eingeschränkt, ebenso ist die Verwendung von Oberflächenwellen, die sich an der Blechoberfläche ausbreiten, denkbar und möglich.

## Patentansprüche

1. Verfahren zur zerstörungsfreien Prüfung einer Schweißverbindung eines in einem Kontaktbereich (4) auf ein flächenhaft ausgedehntes Blech (6) aufgeschweißten Bolzens (8), insbesondere eines im Hubzündverfahren aufgeschweißten Stehbolzens, wobei sich beim Schweißvorgang im Blech unterhalb des Kontaktbereichs (4) ein Schweißbad (10) mit verändertem Materialgefüge ausbildet, mittels gerichteten Ultraschallsignalen, die folgenden Verfahrensschritte umfassend:
a) Einschallen von Ultraschallsignalen in das Blech (6) mittels eines gerichtet und schräg einschallenden Ultraschallsenders (1) an einem Einkoppelort (A),
b) Auskoppeln der durch das Blech (6) transmittierten Ultraschallsignale an einem Auskoppelort (B) mittels eines Ultraschallempfängers (2), wobei der Auskoppelort (B) im Schalllaufweg der Signalausbreitung der eingeschallten Ultraschallsignale im Blech (6) liegt,
c) wobei der Schalllaufweg im Blech (6) zwischen Einkoppelort (A) und Auskoppelort (B) in einem solchen Abstand vom Kontaktbereich (4) verläuft, dass das Schweißbad (10) einer als intakt zu klassifizierenden Schweißverbindung vom Schalllaufweg der Ultraschallsignale erfasst wird, und
d) Erfassen der Intensität der vom Einkoppelort (A) zum Auskoppelort (B) transmittierten Ultraschallsignale.

2. Verfahren nach Anspruch 1, **dadurch gekennzeichnet, dass** die erfasste Intensität der transmittierten Ultraschallsignale mit einem vorgegebenen Normwert verglichen wird.

3. Verfahren nach Anspruch 1, **dadurch gekennzeichnet, dass** die Verbindungslinie zwischen Einkoppelort (A) und Auskoppelort (B) in einem solchen Abstand d vom Kontaktbereich (4) verläuft, dass das Schweißbad (10) einer als mangelhaft zu klassifizierenden Schweißverbindung vom Schalllaufweg der Ultraschallsignale im Blech (6) nicht erfasst wird.

4. Verfahren nach Anspruch 1, **dadurch gekennzeichnet, dass** in das Blech (6) im wesentlichen nur Transversalwellen eingeschallt werden.

5. Verfahren nach Anspruch 1, **dadurch gekennzeichnet, dass** in das Blech im wesentlichen nur Volumenwellen eingeschallt werden, die sich mittels Vielfachreflexion an den Blechoberflächen im Blech (6) ausbreiten.

6. Verfahren nach Anspruch 1, **dadurch gekennzeichnet, dass** der Ultraschallsender (1) in einem solchen Abstand (D) vom Kontaktbereich (4) der zu prüfenden Schweißverbindung angeordnet wird, dass sich im Schalllaufweg am Kontaktbereich (4) der zu prüfenden Schweißverbindung ein Fokus der gerichteten Ultraschallsignale ergibt, insbesondere dass die Länge des Schalllaufwegs zwischen Ultraschallsender (1) und Kontaktbereich (4) im wesentlichen eine Nahfeldlänge beträgt.

7. Verfahren nach Anspruch 6, **dadurch gekennzeichnet, dass** der Ultraschallsender (1) und der Ultraschallempfänger (2) symmetrisch zum Kontaktbereich (4) angeordnet wird.

8. Verfahren nach Anspruch 1, **dadurch gekennzeichnet, dass** der Schalllaufweg der Ultraschallsignale so gewählt wird, dass sich bei als intakt zu klassifizierender Schweißverbindung eine erhöhte Einkopplung der Ultraschallsignale in den Bolzen (8) ergibt.

9. Verfahren nach Anspruch 1, **dadurch gekennzeichnet, dass** durch Variation des Abstands (d) der Verbindungslinie zwischen Einkoppelort (A) und Auskoppelort (B) vom Kontaktbereich (4) die Intensität der Ultraschallsignale zwischen Einkoppelort (A) und Auskoppelort (B) ortsaufgelöst erfasst wird.

10. Vorrichtung zur zerstörungsfreien Prüfung einer Schweißverbindung eines in einem Kontaktbereich (4) auf ein flächenhaft ausgedehntes Blech (6) aufgeschweißten Bolzens (8), insbesondere eines im Hubzündverfahren aufgeschweißten Stehbolzens, wobei sich beim Schweißvorgang im Blech unterhalb des Kontaktbereichs (4) ein Schweißbad (10) mit verändertem Materialgefüge ausbildet, mittels gerichteten Ultraschallsignalen, wobei die Vorrichtung die folgenden Komponenten aufweist:
a) einen Ultraschallsender (1) zur Einschallung von Ultraschallsignalen in das Blech (6) an einem Einkoppelort (A),
b) einen Ultraschallempfänger (2) zur Auskopplung der vom Ultraschallsender (1) in das Blech (6) eingeschallten und durch dieses transmittierten Ultraschallsignale an einem Auskoppelort (B),
**dadurch gekennzeichnet, dass**
c) der Ultraschallsender (1) schrägeinschallend ausgeführt ist,
d) der Ultraschallempfänger (2) auf schrägeinfallende Ultraschallsignale empfindlich ist,
e) der Ultraschallempfänger (2) so relativ zum Ultraschallsender (1) angeordnet ist, dass er bei ungestörter Ultraschallsignalausbreitung im Blech (6) im Schalllaufweg der Ultraschallsignale liegt, und
f) eine Abstandsvorrichtung vorgesehen ist, die dazu eingerichtet ist, einen definierten Abstand (d) der Verbindungslinie zwischen Einkoppelort (A) und Auskoppelort (B) vom Kontaktbereich (4) der zu prüfenden Schweißverbindung einzustellen.

11. Vorrichtung gemäß Anspruch 10, **dadurch gekennzeichnet, dass** der Abstand (d) kleiner gewählt ist als der Norm-Mindestradius des Schweißbades (10) einer als einwandfrei zu klassifizierenden Schweißverbindung.

12. Vorrichtung gemäß Anspruch 10, **dadurch gekennzeichnet, dass** der Abstand (d) größer gewählt ist als der Normradius des Schweißbades (10) einer als mangelhaft zu klassifizierenden Schweißverbindung.

13. Vorrichtung gemäß Anspruch 10, **dadurch gekennzeichnet, dass** der Abstand (d) dergestalt variiert werden kann, dass das Schweißbad (10) der zu prüfenden Schweißverbindung mittels der Ultraschallsignale überstrichen werden kann.

## Claims

1. A method for non-destructive testing of a weld joint of a bolt (8) welded onto a contact area (4) on a planar sheet metal (6), more specifically a stud bolt welded on using the lift ignition method, wherein during the welding operation a weld pool (10) having a modified material structure is formed beneath said contact area (4) in said sheet metal, said method using directed ultrasonic signals and comprising the following operational steps:
a) Transmitting of ultrasonic signals into said sheet metal (6) using a directing and obliquely transmitting ultrasonic transmitter (1) at a coupling-in point (A),
b) Coupling out of the ultrasonic signals transmitted through said sheet metal (6) at a coupling-out point (B) by means of an ultrasonic receiver (2), wherein said coupling-out point (B) is located on the acoustic signal spreading path of the ultrasonic signals transmitted into said sheet metal (6),
c) wherein the acoustic path in said sheet metal (6) between the coupling-in point (A) and the coupling-out point (B) extends at such a distance from said contact area (4) that said weld pool (10) of a weld joint to be classified as intact is scanned by the acoustic path of the ultrasonic signals, and
d) Detecting the intensity of the ultrasonic signals transmitted from said coupling-in point (A) to said coupling-out point (B).

2. A method according to claim 1, **characterised in that** the detected intensity of the transmitted ultrasonic signals is compared with a predetermined standard value.

3. A method according to claim 1, **characterised in that** the connecting line between said coupling-in point (A) and said coupling-out point (B) extends at such a distance d from said contact area (4) that said weld pool (10) of a weld joint to be classified as faulty is not scanned by the acoustic path of the ultrasonic signals in said sheet metal (6).

4. A method according to claim 1, **characterised in that** essentially only transversal waves are transmitted into said sheet metal (6).

5. A method according to claim 1, **characterised in that** essentially only volume waves are transmitted into said sheet metal, which spread in said sheet metal (6) by multiple reflection on the sheet metal surfaces.

6. A method according to claim 1, **characterised in that** said ultrasonic transmitter (1) is positioned at such a distance (D) from said contact area (4) of the weld joint to be tested that a focus of the directed ultrasonic signals is formed in the acoustic path at said contact area (4) of the weld joint to be tested and that in particular the length of the acoustic path from said ultrasonic transmitter (1) to said contact area (4) essentially equals one near field length.

7. A method according to claim 6, **characterised in that** said ultrasonic transmitter (1) and said ultrasonic receiver (2) are arranged symmetrically relative to said contact area (4).

8. A method according to claim 1, **characterised in that** the acoustic path of the ultrasonic signals is selected so that a weld joint to be classified as intact results in an enhanced coupling-in of the ultrasonic signals into said bolt (8).

9. A method according to claim 1, **characterised in that** the intensity of the ultrasonic signals between said coupling-in point (A) and said coupling-out point (B) is detected in a location-related manner by varying said distance (d) of the connecting line between said coupling-in point (A) and said coupling-out point (B) from said contact area (4).

10. An apparatus for non-destructive testing of a weld joint of a bolt (8) welded onto a contact area (4) on a planar sheet metal (6), more specifically a stud bolt welded on using the lift ignition method, wherein during the welding operation a weld pool (10) having a modified material structure is formed beneath said contact area (4) in said sheet metal, said apparatus using directed ultrasonic signals and comprising the following components:
a) an ultrasonic transmitter (1) for transmitting ultrasonic signals into said sheet metal (6) at a coupling-in point (A),
b) an ultrasonic receiver (2) for coupling out the ultrasonic signals transmitted by said ultrasonic transmitter (1) into said sheet metal (6) and transmitted through said sheet metal (6) at a coupling-out point (B),
**characterised in that**
c) said ultrasonic transmitter (1) is designed for oblique transmission,
d) said ultrasonic receiver (2) is sensitive to obliquely incident ultrasonic signals,
e) said ultrasonic receiver (2) is arranged relative to said ultrasonic transmitter (1) so that in case of undisturbed ultrasonic signal spreading in said sheet metal (6) it is located on the acoustic path of the ultrasonic signals, and
f) a spacing device is provided which is designed so as to set a defined distance (d) of the connecting line between said coupling-in point (A) and said coupling-out point (B) from said contact area (4) of the weld joint to be tested.

11. An apparatus according to claim 10, **characterised in that** said distance (d) is selected so as to be shorter than the standard minimum radius of said weld pool (10) of a weld joint to be classified as faultless.

12. An apparatus according to claim 10, **characterised in that** said distance (d) is selected so as to be longer than the standard minimum radius of said weld pool (10) of a weld joint to be classified as faulty.

13. An apparatus according to claim 10, **characterised in that** said distance (d) is able to be varied so that said weld pool (10) of the weld joint to be tested is able to be scanned by the ultrasonic signals.

## Revendications

1. Procédé pour le contrôle non-destructif d 'une soudure d'un goujon (8) soudé dans une zone de contact (4) sur une tôle plane (6), en particulier d'un goujon fileté soudé là-dessus en mettant en oeuvre le procédé d'amorçage par arc tiré, lors de l'opération de soudage un bain de soudure (10) ayant une structure modifiée de matière étant formé dans la tôle au-dessous de ladite zone de contact (4), ledit procédé utilisant des signaux ultrasonores dirigés et comprenant les étapes suivants :
a) injection de signaux ultrasonores dans ladite tôle (6) sur un lieu de couplage (A) au moyen d'un émetteur d'ultrasons (1) injectant de manière dirigée et oblique,
b) découplage des signaux ultrasonores transmis à travers la tôle (6), sur un lieu de découplage (B) au moyen d'un récepteur d'ultrasons (2), ledit lieu de découplage (B) étant situé dans la trajectoire acoustique de la propagation des signaux ultrasonores injectés, dans la tôle (6),
c) la trajectoire acoustique dans la tôle (6) entre le lieu de couplage (A) et le lieu de découplage (B) s'étendant à une distance de la zone de contact (4) telle que ledit bain de soudure (10) d'une soudure à classifier comme étant intacte est détecté par la trajectoire acoustique des signaux ultrasonores, et
d) détection de l'intensité des signaux ultrasonores transmis depuis le lieu de couplage (A) au lieu de découplage (B).

2. Procédé selon la revendication 1, **caractérisé par le fait que** l'intensité détectée des signaux ultrasonores transmis est comparée à une valeur normalisée prédéterminée.

3. Procédé selon la revendication 1, **caractérisé par le fait que** la ligne de jonction entre le lieu de couplage (A) et le lieu de découplage (B) s'étend à une telle distance d de ladite zone de contact (4) que le bain de soudure (10) d'une soudure à classifier comme étant imparfaite n'est pas détecté par la trajectoire acoustique des signaux ultrasonores dans la tôle (6).

4. Procédé selon la revendication 1, **caractérisé par le fait que** ce ne sont pour l'essentiel que des ondes transversales qui sont injectées dans la tôle (6).

5. Procédé selon la revendication 1, **caractérisé par le fait que** pour l'essentiel seulement des ondes de volume sont injectées dans la tôle, qui se propagent dans la tôle (6) au moyen d'une réflexion multiple sur les surfaces de la tôle.

6. Procédé selon la revendication 1, **caractérisé par le fait que** ledit émetteur d'ultrasons (1) est disposé à une telle distance (D) de la zone de contact (4) de la soudure à contrôler qu'un foyer des signaux ultrasonores dirigés est créé dans la trajectoire acoustique sur la zone de contact (4) de la soudure à contrôler, en particulier que la longueur de la trajectoire acoustique entre l'émetteur d'ultrasons (1) et la zone de contact (4) est égale à une longueur de champ proche.

7. Procédé selon la revendication 6, **caractérisé par le fait que** l'émetteur d'ultrasons (1) et le récepteur d'ultrasons (2) sont disposés symétriquement par rapport à la zone de contact (4).

8. Procédé selon la revendication 1, **caractérisé par le fait que** la trajectoire acoustique des signaux ultrasonores est choisie de manière à ce qu'une soudure à classifier comme étant intacte résulte dans un couplage plus important des signaux ultrasonores dans le goujon (8).

9. Procédé selon la revendication 1, **caractérisé par le fait que** l'intensité des signaux ultrasonores entre le lieu de couplage (A) et le lieu de découplage (B) est détectée d'une manière relative au lieu en variant la distance (d) séparant la ligne de jonction entre les lieux de couplage (A) et de découplage (B) de la zone de contact (4).

10. Dispositif pour le contrôle non-destructif d'une soudure d'un goujon (8) soudé dans une zone de contact (4) sur une tôle plane (6), en particulier d'un goujon fileté soudé là-dessus en mettant en oeuvre le procédé d'amorçage par arc tiré, lors de l'opération de soudage un bain de soudure (10) ayant une structure modifiée de matière étant formé dans la tôle au-dessous de ladite zone de contact (4), ledit dispositif utilisant des signaux ultrasonores dirigés et comprenant les composants suivants :
a) un émetteur d'ultrasons (1) destiné à injecter des signaux ultrasonores dans ladite tôle (6) sur un lieu de couplage (A),
b) un récepteur d'ultrasons (2) destiné à découpler sur un lieu de découplage (B) les signaux ultrasonores injectés par ledit émetteur d'ultrasons (2) dans la tôle (6) et transmis à travers celle-ci,
**caractérisé par le fait que**
a) ledit émetteur d'ultrasons (1) est réalisé de manière à injecter obliquement,
b) ledit récepteur d'ultrasons (2) est sensible à des signaux ultrasonores obliquement incidents,
c) le récepteur d'ultrasons (2) est disposé par rapport à l'émetteur d'ultrasons (1) de telle manière que, dans le cas d'une propagation non-perturbée des signaux ultrasonores dans la tôle (6), il est situé dans la trajectoire acoustique des signaux ultrasonores, et
d) un dispositif d'écartement est prévu qui est conçu pour régler une distance définie (d) séparant la ligne de jonction entre les lieux de couplage (A) et de découplage (B) de la zone de contact (4) de la soudure à contrôler.

11. Dispositif selon la revendication 10, **caractérisé par le fait que** la distance (d) est choisie de manière à être inférieure au rayon minimal normalisé du bain de soudure (10) d'une soudure à classifier comme étant parfaite.

12. Dispositif selon la revendication 10, **caractérisé par le fait que** la distance (d) est choisie de manière à être supérieure au rayon normalisé du bain de soudure (10) d'une soudure à classifier comme étant imparfaite.

13. Dispositif selon la revendication 10, **caractérisé par le fait que** la distance (d) peut être variée de manière à ce que le bain de soudure (10) de la soudure à contrôler puisse être balayé au moyen des signaux ultrasonores.
